(19) Europäisches Patentamt
European Patent Office
Office européen des brevets

(11) EP 0 539 538 B1

(12) EUROPÄISCHE PATENTSCHRIFT

(45) Veröffentlichungstag und Bekanntmachung des Hinweises auf die Patenterteilung:
14.02.1996 Patentblatt 1996/07

(21) Anmeldenummer: 92908858.1

(22) Anmeldetag: 25.04.1992

(51) Int Cl.$^6$: F01L 1/34, F16D 3/10

(86) Internationale Anmeldenummer:
PCT/DE92/00337

(87) Internationale Veröffentlichungsnummer:
WO 92/20907 (26.11.1992 Gazette 1992/29)

(54) **EINRICHTUNG ZUR VERSTELLUNG DER DREHWINKELZUORDNUNG EINER NOCKENWELLE ZU IHREM ANTRIEBSELEMENT**

DEVICE FOR ADJUSTING THE ANGLE OF ROTATION BETWEEN A CAMSHAFT AND ITS DRIVE

DISPOSITIF DE REGLAGE DE L'ANGLE DE ROTATION D'UN ARBRE A CAMES PAR RAPPORT A SON ELEMENT DE D'ENTRAINEMENT

(84) Benannte Vertragsstaaten:
DE FR GB IT

(30) Priorität: 17.05.1991 DE 4116152

(43) Veröffentlichungstag der Anmeldung:
05.05.1993 Patentblatt 1993/18

(73) Patentinhaber: ROBERT BOSCH GMBH
D-70442 Stuttgart (DE)

(72) Erfinder:
• REMBOLD, Helmut
D-7000 Stuttgart 40 (DE)

• LINDER, Ernst
D-7130 Mühlacker (DE)

(74) Vertreter: Böer, Wilfried
D-70442 Stuttgart (DE)

(56) Entgegenhaltungen:
EP-A- 0 388 244      EP-A- 0 424 103
WO-A-89/10469      DE-A- 3 930 157

• PATENT ABSTRACTS OF JAPAN vol. 8, no. 158 (M-311)(1595) 21. Juli 1984 & JP-A-59 054 713 (FUJI JUKOGYO)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Einrichtung zur Verstellung der Drehwinkelzuordnung einer Nockenwelle zu ihrem Antriebselement nach dem Oberbegriff des Anspruchs 1.

Aus der EP-A-0 163 046 ist eine Einrichtung zur Verstellung der Drehwinkelzuordnung einer Nockenwelle bekannt, bei der zwei auf einem Durchmesser eines mit der Nockenwelle verbundenen Teils angeordnete hydraulische stellmotoren vorgesehen sind, mit je einem Stellkolben, der jeweils über eine Rolle auf eine Rampe wirkt, die auf einem das mit der Nockenwelle verbundene Teil radial umgreifenden Antriebszahnrad angeordnet ist. Die einem jeden Stellmotor zugeordneten Rampen sind dabei gegensinnig geneigt derart, daß bei einer Verstellung des Stellkolbens des einen Stellmotors die Nockenwelle über die Rampe so zum Antriebszahnrad verstellt wird, daß die gegenüberliegende Rampe den Stellkolben des anderen Stellmotors zurückdrängt. Die Stellmotoren werden dabei durch Ventile oder ein Schieberventil so angesteuert, daß der nach außen bewegte Kolben des einen Stellmotors mit Druck beaufschlagt wird und der Arbeitsraum des anderen, gegenüberliegenden Stellmotors entlastet ist, so daß der Kolben dieses Stellmotors der Rampe folgend ausweichen kann. Bei einer solchen Einrichtung ist eine separate Druckquelle erforderlich sowie Magnetventile zur Ansteuerung der Stellmotoren.

In der nicht vorveröffentlichten deutschen Patentanmeldung P 39 30 157 ist eine Einrichtung zur Verstellung der Drehwinkelzuordnung einer insbesondere zur Betätigung von Gaswechselventilen einer Brennkraftmaschine dienenden Nockenwelle beschrieben, die zwei zueinander entgegenwirkende Stellmotoren aufweist, deren einander entsprechenden beweglichen Wände miteinander gekoppelt sind, wobei zur Reduzierung des Aufwandes für die Bereitstellung von Stellmedium und Druckerzeugung in diesem Stellmedium die Arbeitsräume der Stellmotoren einerseits beide über jeweils ein Rückschlagventil an eine Stellmediumdruckquelle angeschlossen sind und andererseits selektiv unmittelbar miteinander über ein Steuerventil verbindbar oder voneinander trennbar sind, so daß Drehmomentschwankungen in jeweils einem der Arbeitsräume und der so entstehende Druck zu bestimmten Zeiten gezielt zur Verstellung mit anschließender Wiederverriegelung der Arbeitsräume ausgenutzt werden.

Die Funktion der in der nicht vorveröffentlichten Patentanmeldung P 39 30 157 beschriebenen Nockenwellenverstelleinrichtung beruht somit darauf, daß im gesamten Drehzahlbereich, bezogen auf das mittlere Antriebsmoment, wechselweise positive und negative Momentenschwankungen auftreten. Die Arbeitsräume der Stellmotoren werden durch eine Feder derart beaufschlagt, daß die Feder im Sinne einer Vergrößerung des Arbeitsraumes eines Stellmotors wirkt. Da die Vorspannung der Spiralfeder gerade entsprechend dem mittleren Antriebsmoment gewählt wird, stellt sich in den Arbeitsräumen ebenfalls wechselweise ein positiver Druck ein. Mittels eines Steuerventils können diese Druckspitzen als Druckmittelquelle unmittelbar gezielt zur Verstellung ausgenutzt werden.

Problematisch ist der Betrieb jedoch bei kleiner Motordrehzahl bzw. bei der Startdrehzahl des Motors, da die Momentenschwankungen bei einem mittleren Antriebsmoment aufgrund abnehmender Massenkräfte kleiner werden. Treten jetzt beim mittleren Antriebsmoment Abweichungen durch Temperaturänderungen bzw. Exemplarunterschiede auf, so kann es vorkommen, daß die Nockenwelle nur noch in einer Richtung verstellt werden kann.

Der Erfindung liegt die Aufgabe zugrunde, eine Einrichtung zur Verstellung der Drehwinkelzuordnung einer Nockenwelle zu ihrem Antriebselement anzugeben, die bei niedrigen Drehzahlen eines Motors eine zuverlässige Verstellung der Nockenwelle erlaubt sowie ein zuverlässigen Starten des Motors bewirkt.

Diese Aufgabe wird bei einer Einrichtung zur Verstellung der Drehwinkelzuordnung einer Nockenwelle zu ihrem Antriebselement nach dem Oberbegriff des Anspruchs 1 durch die im Kennzeichen angegebenen Merkmale gelöst.

Weiterbildungen und vorteilhafte Ausgestaltungen der Erfindung ergeben sich aus den Ansprüchen, der weiteren Beschreibung und der Zeichnung.

Bei einer Einrichtung, wie sie in der nicht vorveröffentlichten Patentanmeldung P 39 30 157 beschrieben ist, werden zur Verstellung der Drehwinkelzuordnung einer insbesondere zur Betätigung von Gaswechselventilen einer Brennkraftmaschine dienenden Nockenwelle zu ihrem Antriebselement, jeweils zwei relativ zueinander in Stellrichtung bewegliche Kreissegmentschalen über ein Ventil mit einer ersten Stelldruckmediumquelle verbunden. Die Kreissegmentschalen sind so miteinander gekoppelt, daß bei Verstellung in Stellrichtung die Kreissegmentschalen gegensinnig verstellt werden und dabei das in dem einen von jeweils einer ersten und einer zweiten Kreissegmentschale begrenzten Arbeitsraum eingeschlossene Volumen sich vergrößert, wenn sich das Volumen in dem anderen Arbeitsraum verringert. Die in den Arbeitsräumen eingeschlossenen Volumina werden bei einer Verstellung um gleiche Beträge vergrößert und verringert. Dabei sind die Arbeitsräume über je ein in Richtung Arbeitsraum offenes Rückschlagventil mit der ersten Stelldruckmediumquelle und unmittelbar über ein von einer Steuereinrichtung gesteuertes Steuerventil miteinander verbindbar.

Erfindungsgemäß wird diese Nockenwellenverstelleinrichtung durch einen zusätzlichen Arbeitsraum erweitert. Der dritte Arbeitsraum wird aus einer dritten Kreissegmentschale mit der zweiten Kreissegmentschale gebildet, mittels der eine zusätzliche Verstellung der Drehwinkelzuordnung bewirkbar ist. Dies hat den Vorteil, daß zusätzlich zu den Verstellmöglichkeiten, die durch die Lösung, wie sie in P 39 30 157 beschrieben ist, eine separat für andere Drehzahlbereiche mögliche Verstellung möglich ist. Dazu kann insbesondere eine zweite Stelldruckmediumquelle verwendet werden, die unabhängig von der ersten Stelldruckmediumquelle betätigbar ist.

Eine Vorspannung wird durch eine insbesondere stirnseitig angeordnete Feder bewirkt, die vorzugsweise in Umfangrichtung angeordnet ist. Diese Vorspannung wird erfindungsgemäß so gewählt, daß sie in jedem Fall kleiner als das Nockenwellenantriebsmoment ist. Dies hat den Vorteil, daß beim Starten bei geöffnetem Magnetventil die Einrichtung infolge des größeren Nockenwellenmomentes in Richtung "spät" verstellt ist. Soll nun im unteren Drehzahlbereich die Einrichtung in Richtung "früh" verstellt werden, so wird der zusätzliche Arbeitsraum vorzugsweise über eine externe Stelldruckmediumquelle mit Druck beaufschlagt.

Dazu wird ein in einem Bypass zur Stelldruckmediumquelle angeordnetes Ventil, vorzugsweise ein 2/2 Magnetventil, geschlossen. Da im Normalfall das Antriebsmoment MA größer ist als das Federmoment MZ, wäre nur eine Verstellung der Einrichtung in Richtung "spät" möglich. Durch die erfindungsgemäße Überlagerung eines Zusatzmomentes MZ, bewirkt durch den zusätzlichen Arbeitsraum, ist eine Verstellung der Einrichtung in Richtung "früh" möglich. Bei höheren Drehzahlen, bei der genügend hohe Amplituden des Antriebsmoment MA auftreten, wird vorteilhaft die Zusatzpumpe abgeschaltet.

Eventuell vorhandene Asymmetrien bei den Amplituden kann bezüglich der Verstellung durch unterschiedliche Ansteuerdauer des Hauptventils der Arbeitsräume ausgeglichen werden. Vorteilhaft wird das Druckniveau der Zusatzpumpe zu 10 bar gewählt. Dies erlaubt die Verwendung eines kostengünstigen Aggregats aus Elektromotor und Pumpe. Gleiches gilt für das Bypassventil, da bezüglich des Druckniveaus und der Schaltzeiten im unteren Drehzahlbereich keine besonderen Anforderungen gestellt werden müssen.

Als Alternative ist auch eine Ausführung verwendbar, bei der das Zusatzmoment MZ über den Druck in dem zusätzlichen Arbeitsraum mittels Drehzahlregelung des Pumpenantriebsmotors so eingestellt wird, daß die Verstellgeschwindigkeit in beiden Richtungen gleich groß ist. Die Erkennung kann durch Auswertung von Sensorwinkelsignalen an der Kurbelwelle und der Nockenwelle erfolgen. Bei diesem Lösungsvorschlag wird parallel zur Stelldruckmediumquelle eine Rückstromdrossel angeordnet. Das Bypassmagnetventil ist während der Regelung geschlossen.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1 Momentenverlauf

Figur 2 Nockenwellenverstellkurve

Figur 3 Nockenwellenverstelleinrichtung

Figur 4 Momentenverteilung der Nockenwellenverstelleinrichtung

Figur 5 Rückstromdrossel sowie

Figur 6 einen Längsschnitt der Nockenwellenverstelleinrichtung.

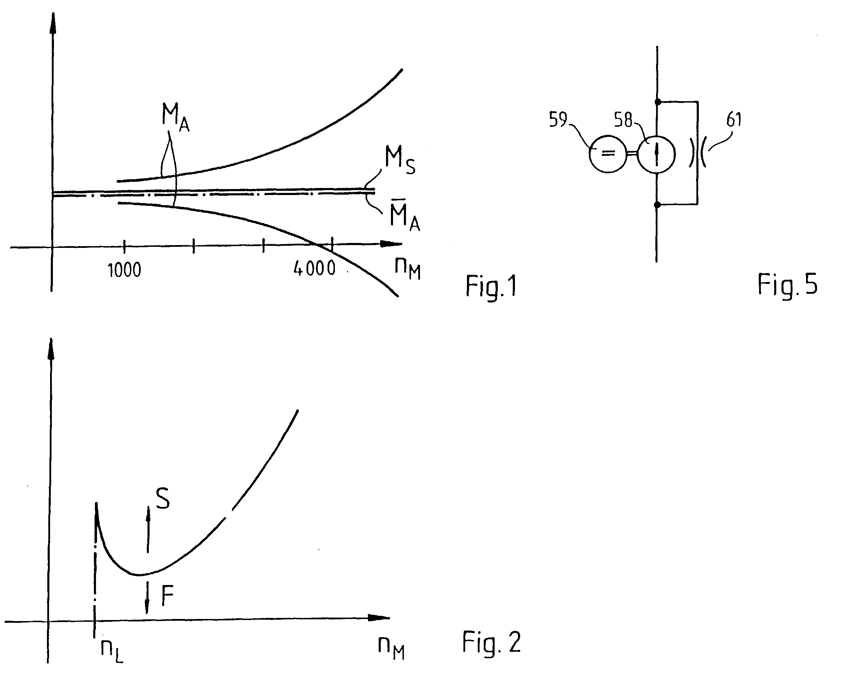

Figur 1 zeigt den idealen Momentenverlauf an der Nockenwelle. Dabei ist über der Ordinate das Nockenwellendrehmoment und über der Abszisse die Drehzahl der Nockenwelle aufgetragen. Symmetrisch zum Spiralfedermoment MS verlaufen in positiver und negativer Richtung die Kurven des Antriebsmomentes MA. Spiralfedermoment MS und mittleres Antriebsmomentes $\overline{MA}$ verlaufen parallel mit gleicher Größe.

Figur 2 zeigt den Verlauf einer Nockenwellenverstellkurve. Über der Ordinate ist der Sollwert der Nockenwellenverdrehung, über der Abszisse die Drehzahl des Motors aufgetragen. Beginnend mit der Leerlaufdrehzahl nL wird die Nockenwellenverdrehung von einem Wert, der einem späten Einlaßschluß entspricht, hin zu einem Wert, der einem frühen Einlaßschluß entspricht, verstellt, bis ein Minimalwert erreicht wird. Mit steigender Drehzahl wird der Wert zu einem späten Einlaßschluß hin verschoben. Die Kurve ist erfindungsgemäß sowohl in Richtung S → "spät" als auch in Richtung F → "früh" verschiebbar.

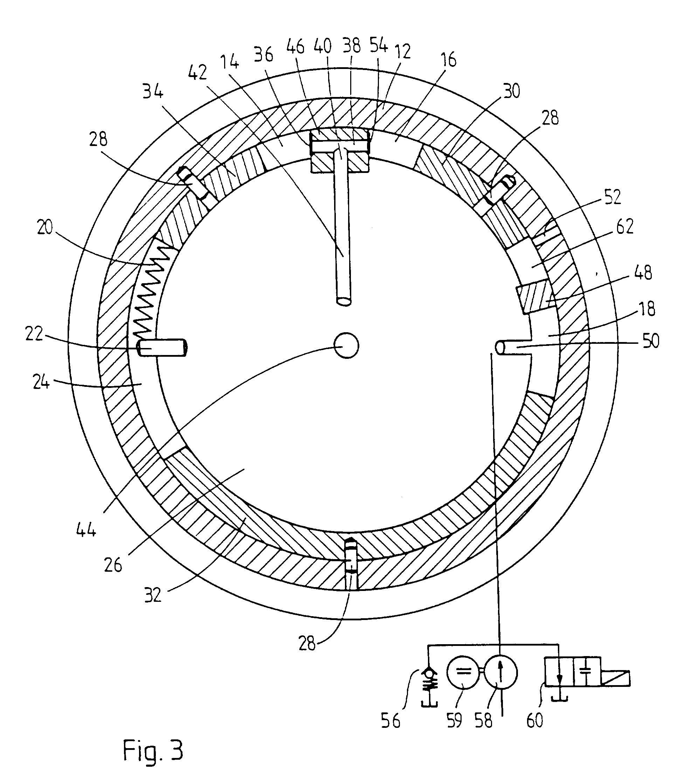

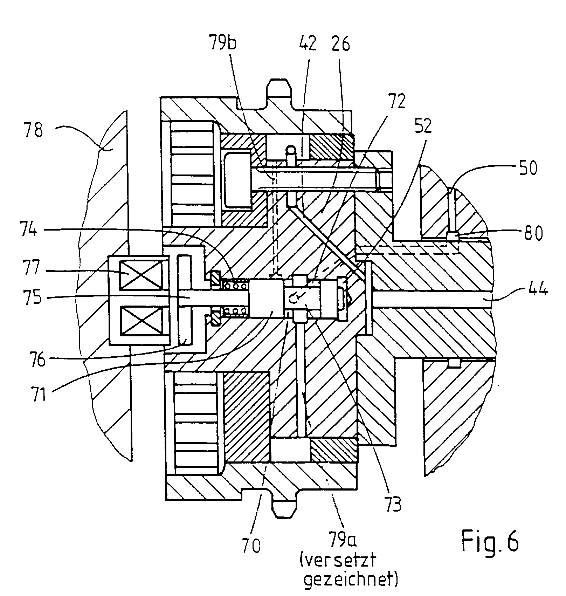

Figur 3 zeigt ein Ausführungsbeispiel der erfindungsgemäßen Nockenwellenverstelleinrichtung. Sie zeigt einen Schnitt durch eine Nockenwelle mit einer axialen Druckmittelleitung 44, die z. B. von der Druckölversorgung einer zugehörigen Brennkraftmaschine herführt. Die Druckmittelleitung ist Teil eines Aufnahmeteils 26, welches auf der Stirnseite eines in Figur 6 gezeigten Stirnflansches der Nockenwelle mittels Schrauben befestigt ist.

Das Aufnahmeteil 26 ist zylindrisch aufgebaut und trägt am Umfang Kreissegmentschalen 30, 32, 34, die mittels Stiften 28 mit einem Antriebselement 12 drehfest verbunden sind. Wie der Figur 3 zu entnehmen ist, schließen die Kreissegmentschale 30 und die Kreissegmentschale 34 einen ersten Arbeitsraum 14 und einen zweiten Arbeitsraum 16 ein, die über eine, in das Antriebsteil als Trennteil eingesetzte Paßfeder 46 voneinander getrennt sind. Die Kreissegmentschale 32 und die Kreissegmentschale 30 schließen einen Raum ein, der mittels einer Paßfeder 48 geteilt ist, die als Zwischenteil über das Antriebsteil 26, in das sie eingesetzt ist, mit dem Trennteil 46 gekoppelt ist. Dabei wird der Raum in einen Teilraum 62, der mittels eines drucklosen Rücklaufs 52 mit einem nicht gezeichneten Druckmittelmediumbehälter verbunden ist, und einen dritten Arbeitsraum 18 geteilt. Bei Veränderung des Volumens des dritten Arbeitsraumes 18 wird bei sich komplementär dazu änderndem Volumen des Teilraumes 62 das Druckmittelmedium aus dem Teilraum 62 abgeleitet bzw. ergänzt. Die Veränderung des Volumens des dritten Arbeitsraumes 18 wird durch Steuerung von ihm zugeführten Druckmittelmedium bewirkt. Dazu wird dem dritten Arbeitsraum 18 über eine Druckmittelleitung 50 der für eine Verstellung der Nockenwelle in Richtung "früh" erforderliche Druck über eine zweite Stelldruckmediummquelle 58 mit zughörigem Antriebsaggregat 59 und parallelgeschaltetem Steuerventil 60 zugeführt. Zur Vermeidung von Beschädigungen durch Überdruck ist der Stelldruckmediumquelle 58 in diesem Ausführungsbeispiel ein Druckbegrenzungsventil 56 parallelgeschaltet. Die Kreissegmentschale 32 und die Kreissegmentschale 34 schließen ihrerseits eine Ausnehmung 24 zwischen Antriebsteil 34 und Aufnahmeteil 26 ein, in welcher Ausnehmung eine Feder 20 zwischen einem mit dem Aufnahmeteil 26 verbundenen Stift 22 und der Stirnseite der Kreissegmentschale 34 unter einer definierten Vorspannung eingespannt ist.

Auf der außenliegenden Stirnseite der Paßfeder 46 liegt diese an der inneren Mantelfläche des Antriebselementes 12 an und trennt somit die unmittelbar an der seitlichen Stirnseite der Paßfedern angrenzenden Arbeitsräume 14, 16 voneinander. Beide Arbeitsräume 14, 16 sind mit einer Querbohrung 38 in der Paßfeder 46 verbindbar, wobei die Querbohrung 38 über eine Radialbohrung 40 und eine in dem Aufnahmeteil 26 weiterführende Druckmittelleitung 42 in hier nicht gezeigter Weise mit der Druckmittelleitung 44 verbunden ist. Am Austritt der Querbohrung 38 jeweils in den Arbeitsräumen 14, 16 ist an dieser Stirnseite jeweils ein Federrückschlagventil 36, 54 vorgesehen. Wie der Figur 6 und der Beschreibung hierzu entnehmbar ist, besteht über ein Steuerventil 70 eine unmittelbare Verbindung 79a, 79b zwischen dem ersten und dem zweiten Arbeitsraum 14, 16.

Die Vorspannung wird durch die stirnseitig angeordnete Feder 20 bewirkt, die in diesem Ausführungsbeispiel in Umfangsrichtung angeordnet ist. Diese Vorspannung wird erfindungsgemäß so gewählt, daß sie in jedem Fall kleiner als das Nockenwellenantriebsmoment ist. Dies hat den Vorteil, daß beim Starten bei geöffnetem Magnetventil die Einrichtung infolge des größeren Nockenwellenmomentes in Richtung "spät" verstellt ist. Soll nun im unteren Drehzahlbereich die Einrichtung in Richtung "früh" verstellt werden, so wird der dritte Arbeitsraum 18 über die externe zweite Stelldruckmediumquelle 58 mit Druck beaufschlagt. Dazu wird ein in einem Bypass zur Stelldruckmediumquelle 58 angeordnetes Steuerventil 60, vorzugsweise ein 2/2-Magnetventil, geschlossen. Da im Normalfall das Antriebsmoment MA größer ist als das Federmoment MS, wäre nur eine Verstellung der Einrichtung in Richtung "spät" möglich. Durch die erfindungsgemäße Überlagerung eines Zusatzmomentes MZ, bewirkt durch den dritten Arbeitsraum 18, ist eine Verstellung der Einrichtung in Richtung "früh" möglich. Bei höheren Drehzahlen, bei der genügend hohe Amplituden des Antriebsmoments MA auftreten, wird vorteilhaft die Stelldruckmediumquelle 58 vorzugsweise durch Öffnen des Steuerventils 60 abgeschaltet.

Eventuell vorhandene Asymmetrien bei den Amplituden können bezüglich der Verstellung durch unterschiedliche Ansteuerdauer des Hauptventils der Arbeitsräume 14, 16 ausgeglichen werden. Vorteilhaft wird das Druckniveau der Stelldruckmediumquelle 58 zu 10 bar gewählt. Dies erlaubt die Verwendung eines kostengünstigen Aggregats aus Elektromotor und Pumpe. Gleiches gilt für das Steuerventil 60, da bezüglich des Druckniveaus und der Schaltzeiten im unteren Drehzahlbereich keine besonderen Anforderungen gestellt werden müssen.

Als Alternative ist auch eine Ausführung verwendbar, bei der das Zusatzmoment MZ über den Druck in dem zusätzlichen Arbeitsraum mittels Drehzahlregelung des Antriebsaggregats 59 der Stelldruckmediumquelle 58 so eingestellt wird, daß die Verstellgeschwindigkeit in beiden Richtungen gleich groß ist. Die Erkennung kann durch Auswertung von Sensorwinkelsignalen an der Kurbelwelle und der Nockenwelle erfolgen. Bei diesem Lösungsvorschlag wird parallel zur stelldruckmediumquelle 58 eine Rückstromdrossel 61 gemäß Figur 5 angeordnet. Das Steuerventil 60 ist während der Regelung geschlossen.

Vorzugsweise wird die externe Druckeinheit 56, 58, 60 über eine Ringnut im Nockenwellenlager angekoppelt.

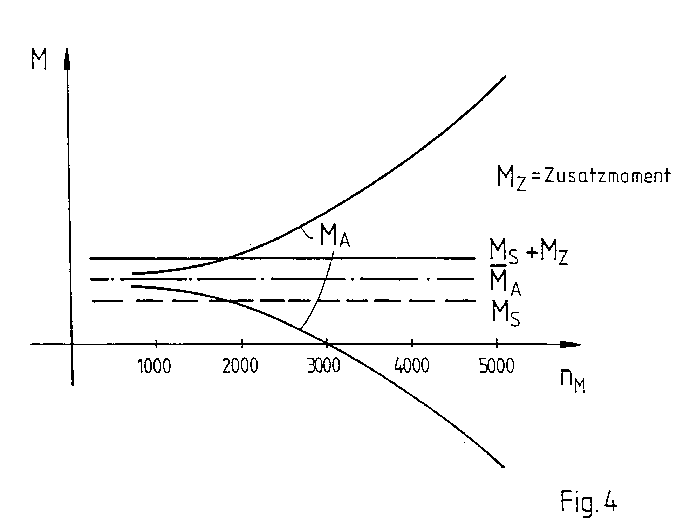

Figur 4 zeigt eine Momentenverteilung der erfindungsgemäßen Nockenwellenverstelleinrichtung gemäß Figur 3. Dabei ist über der Ordinate das Nockenwellendrehmoment M und über der Abszisse die Drehzahl der Nockenwelle aufgetragen. Symmetrisch zum mittleren Nockenwellenmoment $\overline{MA}$ verlaufen in positiver und negativer Richtung die Kurven des Antriebsmomentes MA. Das Spiralfedermoment MS ist kleiner als das mittlere Antriebsmoment $\overline{MA}$. Durch Überlagerung des Zusatzmomentes MZ, hervorgerufen durch den dritten Arbeitsraum 18, zum Spiralfedermoment MS ist somit die Verstellung der Nockenwelle in Richtung "früh" bei niedrigen Drehzahlen möglich.

Figur 6 zeigt einen Längsschnitt der Nockenwellenverstelleinrichtung gemäß Figur 3. Das Steuerventil, das den ersten und zweiten Arbeitsraum 14, 16 miteinander verbindet, ist als Magnetventil 70 ausgeführt, in Form eines Schieberventils mit einem Schieber 71, der innerhalb einer Axialbohrung 72 des Aufnahmeteils 26 verschiebbar ist. Der Schieber 71 weist eine Ringnut 73 auf, die in ihrer Endstellung mit der Einmündung der Verbindungsleitung 79a, die der Versorgung des Arbeitsraumes 14 dient, in Verbindung ist und der zur Stirnseite des Aufnahmeteils 26 weisende Teil des Schiebers 71 die Einmündung der Verbindungsleitung 79b, die der Versorgung des Arbeitsraumes 16 dient, in die Axialbohrung 72 verschließt. In dieser Stellung wird der Schieber 71 durch eine Rückstellfeder 74 vorbelastet. In Richtung der Stirnseite des Aufnahmeteils 26 ragt ein Betätigungsbolzen 75 nach außen und trägt dort eine Ankerplatte 76, die nun einem Elektro-Magneten 77 gegenüberliegt und von diesem entgegen der Kraft der Rückstellfeder verstellbar ist, derart, daß der Schieber 71 die Einmündung der Verbindungsleitung 79b in Verbindung mit der Ringnut 73 bringt, die weiterhin in Verbindung mit der Verbindungsleitung 79a bleibt. Der Elektro-Magnet 77 ist dabei in einem Deckelteil 78 drehfest angeordnet, durch den Stromzuführungen für den Elektro-Magneten 77 nach außen geführt sind. Weiterhin kann über die Druckmittelleitung 50, die in eine Ringnut 80 im Nockenwellenlager mündet, Druckmittelmedium dem dritten Arbeitsraum 18 zugeführt werden.

## Patentansprüche

1. Einrichtung zur Verstellung der Drehwinkelzuordnung einer zur Betätigung von Gaswechselventilen einer Brennkraftmaschine dienenden Nockenwelle (6) zu ihrem Antriebselement (12) mit einer ersten (30) und einer zweiten (34) miteinander gekoppelten Kreissegmentschale, die zwischen einer zylindrischen inneren Mantelfläche des Antriebselements (12) und einer zylindrischen Außenwand eines Aufnahmeteils (26) der Nockenwelle angeordnet sind und dort einen ersten Arbeitsraum (14) und einen zweiten Arbeitsraum (16) einschließen, die durch ein Trennteil (46) voneinander getrennt sind, über je ein zum jeweiligen Arbeitsraum öffnendes Rückschlagventil (36,54) mit einer Stelldruckmediumquelle und unmittelbar über eine von einer Steuereinrichtung gesteuertes Steuerventil (70) miteinander verbindbar sind, bei deren Verbindung über auf die miteinander gekoppelten Kreissegmentschalen (30,34) einerseits und das Trennteil (46) andererseits einwirkenden Antriebskräfte des Antriebsteils und Reaktionskräfte aus Drehmomentenschwankungen von der Nockenwelle her die Volumina der Arbeitsräume (14,16) unter gleichartiger Veränderung der Drehwinkelzuordnung von Antriebselement zu Nockenwelle sich gegensinnig ändern und bei Unterbrechung der Verbindung der erreichte Zustand der Volumina der Arbeitsräume (14,16) beibehalten wird, dadurch gekennzeichnet, daß eine mit der ersten Kreissegmentschale (30) gekoppelte dritte Kreissegmentschale (32) zwischen Antriebselement und Aufnahmeteil angeordnet ist, die mit der ersten Kreissegmentschale (30) einen Raum einschließt, der durch ein mit dem Trennteil (46) gekoppeltes Zwischenteil (48) in einen drucklosen, mit einem Rücklauf (52) versehenen Teilraum (62) und einen Arbeitsraum (18) unterteilt ist, der unmittelbar an die dritte Kreissegmentschale (32) angrenzt und dem über eine Druckmittelleitung (50), Druckmittelmedium zuführbar ist und dessen Volumen durch Steuerung dieses Druckmittelmediums zur zusätzlichen Veränderung der Drehwinkelzuordnung von Antriebselement und Nockenwelle steuerbar ist.

2. Einrichtung nach Anspruch 1, **dadurch gekennzeichnet**, daß der dritte Arbeitsraum (18) mit einer zweiten Stelldruckmediumquelle (58) verbindbar ist, die unabhängig von der ersten Stelldruckmediumquelle betätigbar ist.

3. Einrichtung nach Anspruch 1, **dadurch gekennzeichnet**, daß die zweite und die dritte Kreissegmentschale (34, 32) eine Ausnehmung (24) bilden, in der eine Feder (20) eingelagert ist.

4. Einrichtung nach Anspruch 3, **dadurch gekennzeichnet**, daß die Feder (20) auf eine definierte Vorspannung gehalten ist.

5. Einrichtung nach Anspruch 4, **dadurch gekennzeichnet**, daß die Vorspannung der Feder (20) kleiner als das Nockenwellenantriebsmoment gewählt ist.

6. Einrichtung nach einem oder mehreren der Ansprüche 1 bis 5, **dadurch gekennzeichnet**, daß der dritte Arbeitsraum (18) bei niedrigen Drehzahlen, insbesondere beim Starten der Brennkraftmaschine, mit Stelldruckmedium beaufschlagt wird.

7. Einrichtung nach Anspruch 2, **dadurch gekennzeichnet**, daß als zweite Stelldruckmediumquelle (58) eine Pumpe mit parallelgeschaltetem Steuerventil (60) vorgesehen ist.

8. Einrichtung nach Anspruch 7, **dadurch gekennzeichnet**, daß das parallelgeschaltete Steuerventil (60) bei niedrigen Drehzahlen geschlossen und bei hohen Drehzahlen geöffnet wird.

9. Einrichtung nach Anspruch 7, **dadurch gekennzeichnet**, daß der zweiten Stelldruckmediumquelle (58) ein Druckbegrenzungsventil parallelgeschaltet ist.

10. Einrichtung nach Anspruch 2, **dadurch gekennzeichnet**, daß als zweite Stelldruckmediumquelle (58) eine Pumpe mit parallelgeschalteter Rückstromdrossel (61) verwendet wird.

11. Einrichtung nach Anspruch 10, **dadurch gekennzeichnet**, daß die Drehzahl der Pumpe (58) regelbar ist.

12. Einrichtung nach Anspruch 11, **dadurch gekennzeichnet**, daß für die Regelung ein Sensorwinkelsignal an einer Kurbelwelle ausgewertet wird.

**13.** Einrichtung nach Anspruch 12, **dadurch gekennzeichnet** , daß die zweite Stelldruckmedienquelle (58) über eine Ringnut (80) im Nockenwellenlager angekoppelt ist.

## Claims

**1.** Device for adjusting the rotational angle relationship between a camshaft 6, used for actuating gas exchange valves in an internal combustion engine, and its drive element (12) having a first (30) and a second (34) circular segment shell, which are connected together, are arranged between a cylindrical inner surface of the drive element (12) and a cylindrical outer wall of an accommodation part (26) of the camshaft and there enclose a first working space (14) and a second working space (16), which are separated from one another by a separating part (46), can each be connected by means of a non-return valve (36, 54) opening towards the respective working space to a setting pressure medium source and can be directly connected to one another by means of a control valve (70) controlled by a control device, and, when they are connected, the volumes of the working spaces (14, 16) change in the opposite sense, with a similar change in the rotational angle relationship between the drive element and the camshaft, by virtue of driving forces of the driving part acting on the interconnected circular segment shells (30, 34), on the one hand, and on the separating part (46), on the other hand, and reaction forces due to torque fluctuations stemming from the camshaft, and when the connection is interrupted, the state of the volumes of the working spaces (14, 16) which has been achieved is retained, characterized in that a third circular segment shell (32) connected to the first circular segment shell (30) is arranged between the drive element and the accommodation part, enclosing with the first circular segment shell (30) a space which is divided by an intermediate part (48) connected to the separating part (46) into an unpressurized subspace (62) provided with a return (52) and a working space (18) which directly adjoins the third circular segment shell (32) and can be supplied via a pressure medium conduit (50) with pressure medium and the volume of which can be controlled by controlling this pressure medium to achieve an additional change in the rotational angle relationship between the drive element and the camshaft.

**2.** Device according to Claim 1, characterised in that the third working space (18) can be connected to a second setting pressure medium source (58) which can be actuated independently of the first setting pressure medium source.

**3.** Device according to Claim 1, characterised in that the second and the third circular segment shells (34, 32) form a recess (24) in which a spring (20) is supported.

**4.** Device according to Claim 3, characterised in that the spring (20) is held to a defined preload.

**5.** Device according to Claim 4, characterised in that the preload on the spring (20) is selected to be smaller than the camshaft drive torque.

**6.** Device according to one or more of the Claims 1 to 5, characterised in that the third working space (18) is subjected to setting pressure medium at low rotational speeds, in particular during the starting of the internal combustion engine.

**7.** Device according to Claim 2, characterised in that a pump with parallel-connected control valve (60) is provided as the second setting pressure medium source (58) .

**8.** Device according to Claim 7, characterised in that the parallel-connected control valve (60) is closed at low rotational speeds and is open at high rotational speeds.

**9.** Device according to Claim 7, characterised in that a pressure limiting valve is connected in parallel with the second setting pressure medium source (58).

**10.** Device according to Claim 2, characterised in that a pump with parallel-connected return flow throttle (61) is used as the second setting pressure medium source (58).

**11.** Device according to Claim 10, characterised in that the rotational speed of the pump (58) can be controlled.

**12.** Device according to Claim 11, characterised in that a sensor angle signal at a crankshaft is analysed for the purpose of control.

**13.** Device according to Claim 12, characterised in that the second setting pressure medium source (58) is connected via an annular groove (80) in the camshaft bearing.

## Revendications

**1.** Dispositif de réglage par rapport à son élément d'entraînement (12) de l'angle de rotation d'un arbre à cames (6) servant à actionner les soupapes à gaz alternées d'un moteur à combustion interne, dans lequel :

- une première (30 et une deuxième (34) coquille en forme de segment circulaire, sont montées entre la paroi cylindrique interne de l'élément d'entraînement (12) et la face cylindrique externe d'un montage (26), en délimitant ainsi une première et une deuxième chambre de travail (14, 16),

- les chambres (14, 16) sont séparées par une pièce de séparation (46) et peuvent être mises en communication avec une source de fluide de réglage sous pression par des soupapes (36, 54) anti-retour s'ouvrant respectivement vers l'une et l'autre des chambres ainsi que directement entre elles par l'intermédiaire d'une soupape (70) asservie à un dispositif de commande,

- lorsque les chambres sont en liaison, les forces d'entraînement agissant par l'intermédiaire d'une part des coquilles (30, 34) accouplées entre elles et d'autre part de la pièce de séparation (46) ainsi que les forces de réaction résultant des oscillations du couple délivré par l'arbre à cames, font varier les volumes des chambres de travail (14, 16) en sens inverses avec modification corrélative de la position angulaire de l'élément d'entraînement par rapport à l'arbre à cames, l'interruption de la liaison assurant le maintien en l'état des volumes des chambres de travail (14, 16),

ce dispositif présentant les caractéristiques suivantes :

- une troisième coquille en forme de segment circulaire (32) montée entre l'élément d'entraînement et le montage, est accouplée à la première coquille (30) et délimite avec celle-ci une chambre qu'une pièce intermédiaire (48) accouplée à la pièces de séparation (46) divise en une chambre partielle (62) équipée d'un retour (52) et une chambre de travail (18) délimitée directement par la troisième coquille (32),

- la chambre de travail (18) peut être alimentée en fluide sous pression à travers une canalisation (50) et son volume, en commandant le fluide sous pression, peut être lui-même commandé de manière à produire une modification additionnelle de la position angulaire de l'élément d'entraînement par rapport à l'arbre à cames.

2. Dispositif selon la revendication 1, caractérisé en ce que la troisième chambre de travail (18) peut être reliée à une seconde source (58) de fluide de réglage sous pression, pouvant fonctionner indépendamment de la première.

3. Dispositif selon la revendication 1, caractérisé en ce que la deuxième et la troisième coquille (34, 32) forment un évidement (34) dans lequel est monté un ressort (20).

4. Dispositif selon la revendication 3, caractérisé en ce que le ressort (20) a une tension initiale au repos définie.

5. Dispositif selon la revendication 4, caractérisé en ce que la tension au repos du ressort (20) est choisie inférieure au couple d'entraînement de l'arbre à cames.

6. Dispositif selon une ou plusieurs des revendications précédentes, caractérisé en ce que la troisième chambre de travail (18) pour de faibles vitesses de rotation, notamment au démarrage du moteur, est soumise à l'action du fluide de réglage sous pression.

7. Dispositif selon la revendication 2, caractérisé en ce qu'il comporte, comme seconde source (58) de fluide de réglage sous pression, une pompe avec soupape de commande (60) montée en parallèle.

8. Dispositif selon la revendication 7, caractérisé en ce que la soupape (60) montée en parallèle est fermée aux basses vitesses de rotation et ouverte aux vitesses élevées.

9. Dispositif selon la revendication 7, caractérisé en ce qu'une soupape de limitation de pression est montée en parallèle sur la seconde source (58) de fluide sous pression.

10. Dispositif selon la revendication 2, caractérisé en ce qu'on utilise, comme seconde source (58) de fluide sous pression, une pompe équipée en parallèle d'un dispositif (61) d'étranglement de flux de retour.

11. Dispositif selon la revendication 10, caractérisé en ce que la vitesse de rotation de la pompe (58) est réglable.

12. Dispositif selon la revendication 11, caractérisé en ce que pour effectuer le réglage, on exploite le signal d'un détecteur d'angle associé au vilebrequin.

13. Dispositif selon la revendication 12, caractérisé en ce que la seconde source (58) de fluide sous pression est raccordée à une gorge annulaire (80) fraisée dans le palier portant l'arbre à cames.

$M_A$

$M_S$

$\bar{M}_A$

1000  4000  $n_M$

Fig.1

59  58  61

Fig. 5

S

F

$n_L$  $n_M$

Fig. 2

EP 0 539 538 B1

Fig. 3

Fig. 4

Fig.6